# EUROPEAN PATENT SPECIFICATION

(11) **EP 3 204 277 B1**
(45) Date of publication and mention of the grant of the patent: **23.12.2020**
(21) Application number: 15791750.1
(22) Date of filing: 05.10.2015
(51) Int. Cl.: B62D 11/08, B60T 11/21, B60T 8/40, B60T 8/48

(54) **PRESSURE BALANCING DEVICE FOR HYDRAULIC BRAKING SYSTEMS**
DRUCKAUSGLEICHVORRICHTUNG FÜR HYDRAULISCHE BREMSSYSTEME
DISPOSITIF D'ÉQUILIBRAGE DE PRESSION POUR SYSTÈMES HYDRAULIQUES DE FREINAGE

(30) Priority: 09.10.2014 IT TO20140810
(43) Date of publication of application: 16.08.2017
(73) Proprietor: VHIT S.p.A., 26010 Offanengo (IT)
(72) Inventor: CADEDDU, Leonardo, I-26010 Offanengo (CR) (IT)
(74) Representative: Bee, Joachim
(86) International application number: PCT/IB2015/057609
(87) International publication number: WO 2016/055922

(56) References cited:
- EP-A2- 0 441 476
- WO-A2-2012/035498
- WO-A2-2012/095767
- FR-A1- 2 450 726
- FR-A1- 2 515 124
- US-A- 3 640 067
- US-A- 4 557 110

## Description

### Technical field

The present invention generally relates to a balancing device for hydraulic braking systems employed, in particular, in agricultural vehicles, earth moving machines and the like.

More particularly, the present invention relates to pressure balancing devices mechanically controlled by the stroke of pistons/moving elements in master cylinders of the braking systems.

### Prior Art

In the field of agricultural vehicles and the like it is known to employ hydraulic braking systems including two master cylinders coupled together.

In such braking systems, two pedals are typically used in order to control the braking of a right rear wheel and a left rear wheel, respectively.

The two pedals can be individually operated, thereby causing vehicle steering. Such a way of operating is referred to as "Steer-by-Braking".

The two pedals can also be simultaneously operated, when it is desired to achieve the actual vehicle braking. In this case, in order to ensure a balanced braking, that is, a braking with substantially the same intensity on both rear wheels, it is necessary to use braking balancing devices.

Balancing devices enable balancing the control pressures at the outlet from both master cylinders, thereby ensuring the same braking action on both rear wheels of the vehicle notwithstanding the occurrence of different pressures within the two master cylinders. Such a condition is typical of braking systems with two control pedals, even if the pedals are connected by a suitable lock.

Two kinds of devices for pressure balancing between two master cylinders in a hydraulic braking system are known, namely "pressure-controlled" balancing devices and "stroke-controlled" balancing devices.

In "pressure-controlled" balancing devices, the pressure balancing mechanism is hydraulically driven by the pressure achieved by the braking liquid inside the master cylinder.

For instance, a braking system having a pressure-controlled balancing device is known from document WO 2012/035498 A2.

The known pressure balancing device includes a shutter which is actuated, in order to be opened, in a manner fluidically controlled by the pressure of the braking liquid inside the master cylinder of the braking system.

In "stroke-controlled" balancing devices, to which reference will be made hereinafter, the pressure balancing mechanism is mechanically actuated when the pistons/moving elements operating in the master cylinders have displaced by a given stroke.

Document EP 1457400 in the name of the Applicant discloses a "stroke-controlled" balancing device, in which the master cylinders communicate through a balancing duct, the ends of which end into orifices formed in the master cylinders. The pistons operating in the master cylinders, when in rest positions, tightly seal the cylinder orifices through gaskets, thereby blocking the passage between the balancing duct and the inside of the cylinders. A further orifice and an ring-shaped hollow space are formed in the piston walls in such a manner that, when the pedals connected to the two master cylinders are acted upon, the sliding of the pistons enables the balancing duct to freely communicate with the inside of the master cylinders through such an orifice and such a hollow space in the piston, thereby resulting in a pressure balancing.

Even if devices of this kind correctly accomplish their function, they have the problem of an excessive axial size. Actually, the sealing gaskets provided in the pistons must be able to slide inside the master cylinders, thereby enabling the balancing duct to communicate with the master cylinders. As a consequence of such a constraint, the lengths of the pistons and the master cylinders of the braking systems with "stroke-controlled" balancing are greater than the lengths attainable in the absence of the balancing device.

A stroke-controlled balancing device for a set of master cylinders of a braking system is *inter alia* known from document US 4,557,110 A. In the known device, each piston operating in each master cylinder directly actuates a valve connected to the balancing duct and arranged in orthogonal direction to the respective master cylinder.

A balancing device with similar structural characteristics to those disclosed for document US 4,557,110 A is *inter alia* known from document US 3,640,067.

Generally speaking, the Applicant has noticed that the prior art fails to effectively solve the problem of the too great axial and/or transversal size of the master cylinders of a hydraulic braking system when such a braking system employs a "stroke-controlled" balancing device for balancing the pressure between the master cylinders.

Such a problem is of relevance in particular in agricultural vehicles, where the need of reducing the axial and/or transversal sizes of the devices installed therein is more and more felt.

### Description of the invention

It is an object of the present invention to provide a braking assembly comprising a pressure balancing device solving the technical problem described above.

According to the present invention, this object is achieved by means of a braking assembly as claimed.

The present invention also concerns a hydraulic braking system comprising two braking assembly equipped with respective balancing devices according to the present invention.

The claims are integral part of the technical teaching provided herein in respect of the invention.

The following synthetic description of the invention is provided in order to allow a basic understanding of some aspects of the invention.

Such a synthetic description is not a thorough description and, as such, it is not to be intended as being suitable for identifying key or critical elements of the invention or for defining the scope of the invention. It is only aimed at setting forth some concepts of the invention in simplified form, as an anticipation of the detailed description below.

In accordance with a preferred embodiment, the pressure balancing device is a balancing device mechanically operable by a respective braking device so as to build a stroke-controlled balancing device.

In accordance with a feature of a preferred embodiment, the pressure balancing device is formed in a body including the respective braking device, and is located externally of and alongside a master cylinder of the respective braking device.

In accordance with a further feature of the preferred embodiment, the pressure balancing device includes a normally closed balancing valve and a kinematic mechanism arranged to open and close the balancing valve and operable by moving elements/pistons of the braking device.

### Brief Description of the Figures

The above and other features and advantages of the present invention will become apparent from the following description of a preferred embodiment, made by way of non limiting example with reference to the accompanying drawing, in which elements denoted by a same or similar numerical reference correspond to elements having the same or similar function and construction, and in which:

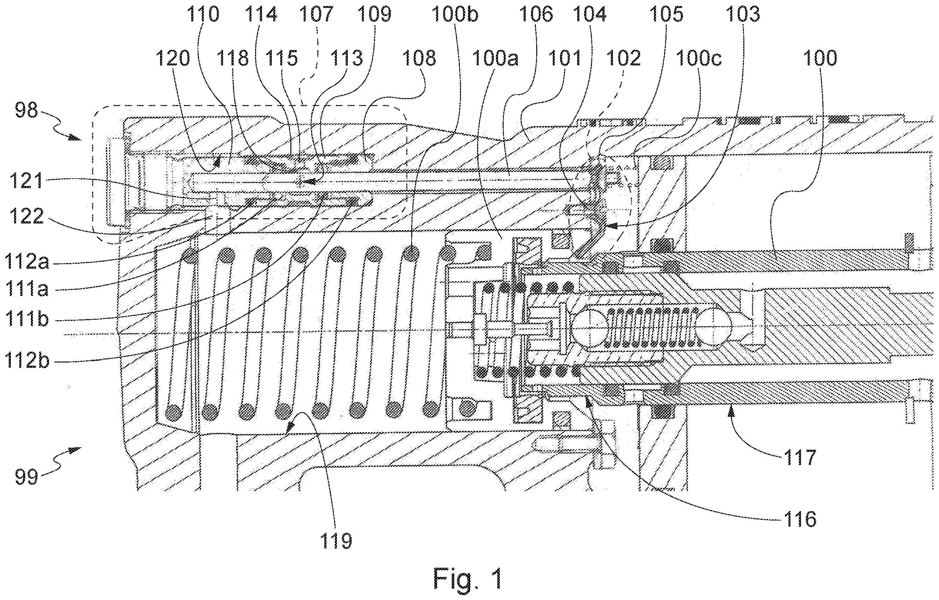

- Fig. 1 is a sectional view of a master cylinder associated with a pressure balancing device according to the present invention.

### Description of a Preferred Embodiment

Referring to Fig. 1, a braking assembly 98, 99 according to the present invention comprises, within a body 101, a pressure balancing device 98 and a braking device 99.

Braking device 99 includes a master cylinder 119, a piston 100a and a piston 100, for instance a plunger of a "hydrobooster" servo system, connected in known manner to a pedal.

Balancing device 98 includes a balancing valve 106, 107 and a kinematic mechanism 102 arranged to be mechanically driven by the stroke of pistons 100, 100a of braking device 99, so as to build a "stroke-controlled" balancing device.

Plunger 100 of braking device 99 has a first surface 117 and a second surface 116, having cross sections with different diameters and connected by a joining chamfer. More particularly, the first surface 117 has a cross section with greater diameter than the second surface 116.

Piston 100a is located inside master cylinder 119. The piston is kept in position by a spring 100b and is arranged to cooperate, in known manner, with the second surface 116 of plunger 100.

Kinematic mechanism 102 of balancing device 98 builds a mechanical connection between the pair of pistons 100 and 100a of the braking device and balancing valve 106, 107 of balancing device 98. In one of the possible configurations, given only by way of example, such a kinematic mechanism 102 includes a rocker lever 103 and an articulation point 104, on which rocker lever 103 is articulated in known manner. Rocker lever 103 has a suitably shaped end, which is positioned (in rest conditions, that is, in the absence of braking) in a recess provided between plunger 100 and piston 100a. The other end of lever 103 engages a groove 105 formed at one end of a stem 106 that is kept in position by a mounting spring 100c. Stem 106 and a balancing valve assembly 107 form, together, the balancing valve through which master cylinder 119 is hydraulically connected to a balancing duct and hence to at least a second braking device, substantially identical to the device described here.

Both stem 106 and valve assembly 107 of the balancing valve are located inside a cylindrical bore 120, preferably with varying diameter, formed in body 101, and outside master cylinder 119. Preferably, cylindrical bore 120 in balancing device 98 has a longitudinal axis parallel to the longitudinal axis of master cylinder 119.

Cylindrical bore 120 preferably has a first portion, proximal relative to kinematic mechanism 102, and a second portion, distal relative to kinematic mechanism 102. Preferably, the first portion has a smaller diameter than the second portion, the diameter being such as to enable stem 106 to slide inside the first portion. The second portion is on the contrary arranged to house valve assembly 107 of balancing device 98.

Balancing valve assembly 107 includes an abutment bush 108, a spacer 109 and a cap 110.

Abutment bush 108 is located against the shoulder formed between the first and second portions of cylindrical bore 120. Cap 110 of valve assembly 107 closes cylindrical bore 120 at an end remote from kinematic mechanism 102. Spacer 109 is located between cap 110 and bush 108.

Bush 108, spacer 109 and a portion of cap 110 have central bores coaxial with one another and with at least the first portion of cylindrical bore 120. Such bores, having substantially the same diameter as the first portion of cylindrical bore 120, are such as to allow stem 106 to slide inside them.

An inner chamber 118, for instance ring shaped, and an outer chamber 114, for instance ring shaped, are formed in spacer 109 and are connected through a hole 115. Outer chamber 114 is in turn connected, through a hole 113 formed in body 101, with a balancing duct (not shown). The balancing duct allows communication between the balancing devices.

An opening 121 is formed in cap 110, at a peripheral position, and it communicates with a further opening 122 formed in body 101. Openings 121, 122 put the inner central bore of cap 110 in communication with master cylinder 119.

Furthermore, two pairs of gaskets 111a, 111b, 112a, 112b, of the O-ring type, are located between bush 108 and spacer 109 and between spacer 109 and cap 110. More particularly, gaskets 112a, 112b seal valve assembly 107 by cooperating with the wall of cylindrical bore 120, whereas gaskets 111a, 111b seal valve assembly 107 by cooperating with stem 106.

A hydraulic braking system, for instance of an agricultural vehicle, includes a pair of braking devices and the relevant balancing devices like those described hitherto, wherein each of the braking devices individually acts on a single rear wheel of the agricultural vehicle.

Preferably, the pair of braking devices and the relevant balancing devices, as well as the balancing duct connecting them, are all formed inside a same body 101.

In accordance with other embodiments, the two braking devices and the two balancing devices are possibly formed in separate bodies.

The operation of balancing device 98 described hitherto is as follows.

When braking device 99 is in rest position, that is, when the pedal connected to plunger 100 is not acted upon, piston 100a is kept in an initial rest position by spring 100b, and stem 106 is kept in an initial rest position by means of piston 100a and mounting spring 100c. In such a position, stem 106 blocks the passage between inner chamber 118 of spacer 109 and the central bores of valve assembly 107, and hence between the balancing duct and master cylinder 119. Pressurised fluid possibly coming from the balancing duct will therefore be blocked in valve assembly 107 thanks to the two pairs of gaskets 111a, 111b, 112a, 112b. The balancing valve is therefore of the normally closed type.

By acting on the pedal connected to plunger 100, the latter moves to the left (with reference to Fig. 1) until reaching piston 100a. The plunger and the piston, by overcoming the resistance of spring 100b, continue then moving to the left, so that the chamfer joining the first zone 117 and the second zone 116 reaches rocker lever 103 of kinematic mechanism 102.

The movement of plunger 100 causes, thanks to the joining chamfer, clockwise rotation of rocker lever 103, centred on a fulcrum, for instance articulation point 104, from an initial rest position to a final position. Stem 106 connected to lever 103 is therefore dragged to the right, thereby overcoming the resistance of spring 100c and becoming disengaged from gasket 111a. Moreover, the pressure created inside master cylinder 119 due to the thrust exerted by piston 100a is transmitted, through opening 122, from master cylinder 119 to opening 121 in cap 110 inside valve assembly 107. This further causes a thrust on stem 106 and contributes therefore to the stem displacement to the right.

The displacement of stem 106 to the right enables the balancing valve to pass from a closed position to an open position. Indeed, stem 106 moves to the right until becoming disengaged from gasket 111a, thereby opening the passage between the central bore in cap 110 and chamber 116 in spacer 109, that is, putting master cylinder 119 in communication with the balancing duct, in accordance with what has been described before.

Advantageously, the balancing valve remains in the open position during the whole displacement of plunger 100, both forwards and backwards, independently of the pressure present inside master cylinder 119.

In a braking system of a vehicle including two braking devices and two braking balancing devices like those described hitherto, if both pedals are actuated and the balancing valves are consequently opened, the two master cylinders can freely communicate, thereby achieving pressure balancing.

If on the contrary only one of the two pedals is actuated, in order to make the vehicle steer, the pressure generated in the master cylinder of the braking device having been actuated is transmitted, through its balancing valve and the balancing duct, to the closed balancing valve of the balancing device corresponding to the braking device having not been actuated. Such a balancing valve remains in the closed position since the pressure transmitted thereto generates a null resultant force on the corresponding stem.

When the thrust on the pedal of braking device 99 ceases, spring 100b moves piston 100a towards its initial rest position, thereby making also plunger 100 slide. The chamfer formed in plunger 100, by sliding to the right, goes beyond rocker lever 103 so that lever 103 can rotate counterclockwise, under the thrust of piston 100a and spring 100c. Stem 106 connected to lever 103 consequently moves to the left, thereby resuming its initial rest position (and hence closing the balancing valve).

Balancing device 98 according to the present invention has the advantage of having a reduced axial size thanks to the use of the balancing valve arranged alongside the master cylinder. Actually, this allows reducing the length of the master cylinder by an amount approximately equal to the value of the maximum stroke of its internal moving elements, for instance the internal moving elements of the "hydrobooster" servo system, in the average about 35 to 40 mm, with respect to the known stroke-controlled balancing devices.

The present balancing device 98 also has the advantage of being applicable to braking devices using the brake boosting function with pre-filling of the chamber contained in the master cylinder.

It is clear that the above description is given only by way of non-limiting example and that changes and modifications are possible without departing from the scope of the invention as defined in the following claims.

## Claims

1. A braking assembly (98, 99) comprising a braking device (99) and a pressure balancing device (98), mechanically and hydraulically connected to said braking device (99) comprising a master cylinder (119), said balancing device including:
- a normally closed balancing valve (106, 107) connectable to a balancing duct, said balancing valve being positioned outside the master cylinder (119) of the braking device (99) and being formed in a body (101) also comprising the braking device (99),
and being **characterised in that** it includes:
- a kinematic mechanism (102), which is arranged to be mechanically controlled by said braking device (99) and is mechanically connected to said balancing valve (106, 107) so as to provide a stroke-controlled balancing device (98);
and **in that**:
- said balancing valve (106, 107) is located inside a cylindrical bore (120) arranged along a longitudinal axis parallel to the longitudinal axis of the master cylinder (119).

2. The braking assembly (98, 99) according to claim 1, wherein said balancing valve (106, 107) includes:
- a stem (106), and
- a balancing valve assembly (107) arranged to cooperate with said stem (106),
said stem and said valve assembly being located inside said cylindrical bore (120),
said stem being arranged to mechanically interact with said kinematic mechanism (102) so as to be displaced from an initial rest position to a final position, thus enabling said balancing valve to pass from a closed position to an open position.

3. The braking assembly (98, 99) according to claim 2, wherein said stem (106) is arranged so that a pressure created inside the master cylinder (119) causes a thrust on said stem which contributes to displace the stem from the initial rest position to the final position.

4. The braking assembly (98, 99) according to any one of claims 2 to 3, wherein said kinematic mechanism (102) includes:
- a rocker lever (103),
- an articulation point (104) on which the lever (103) is articulated, and
- a spring (100c);
said lever (103) having a first end suitably shaped in order to interact with said braking device (99) and a second end connected to the stem (106), and being arranged to move, along with the stem (106), from an initial rest position to a final position and vice versa;
said spring (100c) being arranged to hold said stem in the initial rest position, during both assembly and operation.

5. The braking assembly (98, 99) according to any one of claims 2 to 4, wherein the balancing valve assembly (107) of said valve includes
- an abutment bush (108),
- a spacer (109),
- a cap (110),
- a first gasket (111a) and a second gasket (111b) arranged to seal the balancing valve assembly (107) by cooperating with the stem (106), and
- a third gasket (112a) and a fourth gasket (112b) arranged to seal the balancing valve assembly (107) by cooperating with the wall of the cylindrical bore (120);
the bush (108), the spacer (109) and the cap (110) having coaxial and communicating central bores, arranged to receive the stem (106),
the spacer (109) comprising chambers and passages (114, 115, 116) putting said central bores in communication with a hole (113) connectable to the balancing duct.

6. The braking assembly (98, 99) according to claim 5, wherein said balancing valve is:
- in its closed position when said stem (106) is in the initial rest position, in which the stem occupies the central bore of the spacer (109) and engages the first and the second gasket (111a, 111b), thus obstructing communication between an internal ring-shaped chamber (116) of the spacer (109) and the central bores of the valve assembly (107);
- in its open position when said stem (106) moves towards the final position, thereby becoming disengaged from the first gasket (111a) and freeing, at least partially, the central bore of the spacer (109), thus allowing communication between the internal ring-shaped chamber (116) of the spacer (109) and the central bores of the valve assembly (107).

7. A hydraulic braking system comprising:
- a first and a second braking assembly (98, 99) comprising respective first and second braking device (99) and first and second pressure balancing devices (98), according to any of claims 1 to 6,
- a balancing duct,
said first and second balancing device (98) being connected to each other through said balancing duct.

8. The braking system according to claim 7, wherein each of said braking devices (99) comprises:
- the master cylinder (119),
- a first piston (100) comprising two external surfaces (117, 116) having different diameters, and a joining chamfer between said two external surfaces,
- a second piston (100a) arranged to cooperate with said first piston (100),
- a brake actuating pedal;
said first piston (100) being connected to said pedal and being arranged to move, when a thrust is applied onto said pedal, from a rest position towards the inside of the master cylinder (119), so that said joining chamfer reaches the lever (103) of the kinematic mechanism (102) of the respective balancing device (98), thus making the lever (103) rotate from its initial rest position to its final position;
said second piston (100a) being arranged to move, in a tight manner, inside the master cylinder (119) under a thrust by said first piston (100), and to return to a rest position when said thrust applied onto said pedal ceases and through the action of a spring (100b), so as to reach said lever (103), thus making the lever rotate from its final position to its initial rest position.

9. The braking system according to claims 7 or 8, wherein said first and second braking devices (99) are provided in a single body (101).

10. The braking system according to any one of claims 7 to 9, wherein said first and second braking devices (99) are equipped with brake boosters.

11. The braking system according to any one of claims 7 to 9, wherein said first and second braking devices (99) are provided with brake boosters with prefilling function of the master cylinders.

## Patentansprüche

1. Bremsanordnung (98, 99), umfassend eine Bremsvorrichtung (99) und eine Druckausgleichvorrichtung (98), mechanisch und hydraulisch verbunden mit der Bremsvorrichtung (99), umfassend einen Hauptzylinder (119), wobei die Ausgleichvorrichtung beinhaltet:
- ein normalerweise geschlossenes Ausgleichventil (106, 107), verbindbar mit einem Ausgleichkanal, wobei das Ausgleichventil außerhalb des Hauptzylinders (119) der Bremsvorrichtung (99) positioniert ist und in einem Körper (101) ausgebildet ist, der auch die Bremsvorrichtung (99) umfasst,
und **dadurch gekennzeichnet ist, dass** sie beinhaltet:
- einen kinematischen Mechanismus (102), der angeordnet ist, um von der Bremsvorrichtung (99) mechanisch gesteuert zu werden, und mit dem Ausgleichventil (106, 107) mechanisch verbunden ist, um eine hubgesteuerte Ausgleichvorrichtung (98) bereitzustellen;
und dadurch, dass:
- sich das Ausgleichventil (106, 107) innerhalb einer zylindrischen Bohrung (120) befindet, die entlang einer Längsachse parallel zur Längsachse des Hauptzylinders (119) angeordnet ist.

2. Bremsanordnung (98, 99) nach Anspruch 1, wobei das Ausgleichventil (106, 107) beinhaltet:
- einen Schaft (106), und
- eine Ausgleichventilanordnung (107), angeordnet, um mit dem Schaft (106) zusammenzuwirken,
wobei sich der Schaft und die Ventilanordnung innerhalb der zylindrischen Bohrung (120) befinden,
wobei der Schaft angeordnet ist, um mechanisch mit dem kinematischen Mechanismus (102) zu interagieren, um von einer anfänglichen Ruheposition in eine finale Position versetzt zu werden, dem Ausgleichventil so ermöglichend, von einer geschlossenen Position in eine offene Position überzugehen.

3. Bremsanordnung (98, 99) nach Anspruch 2, wobei der Schaft (106) so angeordnet ist, dass ein im Inneren des Hauptzylinders (119) erzeugter Druck einen Schub auf den Schaft verursacht, der dazu beiträgt, den Schaft von der anfänglichen Ruheposition in die finale Position zu versetzen.

4. Bremsanordnung (98, 99) nach einem der Ansprüche 2 bis 3, wobei der kinematische Mechanismus (102) beinhaltet:
- einen Schwinghebel (103),
- einen Gelenkpunkt (104), an dem der Hebel (103) gelenkig befestigt ist, und
- eine Feder (100c) ;
wobei der Hebel (103) ein erstes Ende aufweist, das geeignet geformt ist, um mit der Bremsvorrichtung (99) zu interagieren, und ein zweites Ende, das mit dem Schaft (106) verbunden ist, und angeordnet ist, um sich zusammen mit dem Schaft (106) von einer anfänglichen Ruheposition in eine finale Position und umgekehrt zu bewegen;
wobei die Feder (100c) angeordnet ist, den Schaft in der anfänglichen Ruheposition zu halten, während sowohl Montage als auch Betrieb.

5. Bremsanordnung (98, 99) nach einem der Ansprüche 2 bis 4, wobei die Ausgleichventilanordnung (107) des Ventils beinhaltet:
- eine Anschlagbuchse (108),
- ein Distanzstück (109),
- eine Kappe (110),
- eine erste Dichtung (111a) und eine zweite Dichtung (111b), angeordnet, um die Ausgleichventilanordnung (107) durch Zusammenwirken mit dem Schaft (106) abzudichten, und
- eine dritte Dichtung (112a) und eine vierte Dichtung (112b), angeordnet, um die Ausgleichventilanordnung (107) durch Zusammenwirken mit der Wand der zylindrischen Bohrung (120) abzudichten;
wobei die Buchse (108), das Distanzstück (109) und die Kappe (110) koaxiale und im Austausch befindliche zentrale Bohrungen aufweisen, angeordnet, um den Schaft (106) aufzunehmen,
wobei das Distanzstück (109) Kammern und Durchgänge (114, 115, 116) umfasst, welche die zentralen Bohrungen in Austausch mit einem Loch (113) bringen, das mit dem Ausgleichkanal verbindbar ist.

6. Bremsanordnung (98, 99) nach Anspruch 5, wobei das Ausgleichventil:
- in seiner geschlossenen Position ist, wenn der Schaft (106) in der anfänglichen Ruheposition ist, in welcher der Schaft die zentrale Bohrung des Distanzstücks (109) belegt und in die erste und die zweite Dichtung (111a, 111b) eingreift, auf diese Weise einen Austausch zwischen einer inneren ringförmigen Kammer (116) des Distanzstücks (109) und den zentralen Bohrungen der Ventilanordnung (107) behindernd;
- in seiner offenen Position ist, wenn sich der Schaft (106) in Richtung der finalen Position bewegt, auf diese Weise aus der ersten Dichtung (111a) ausgerückt werdend und die zentrale Bohrung des Distanzstücks (109) mindestens teilweise freigebend, auf diese Weise einen Austausch zwischen der internen ringförmigen Kammer (116) des Distanzstücks (109) und den zentralen Bohrungen der Ventilanordnung (107) gestattend.

7. Hydraulikbremssystem, umfassend:
- eine erste und eine zweite Bremsanordnung (98, 99) umfassend eine jeweilige erste und zweite Bremsvorrichtung (99) und erste und zweite Druckausgleichvorrichtungen (98), nach einem der Ansprüche 1 bis 6,
- einen Ausgleichkanal,
wobei die erste und zweite Ausgleichvorrichtung (98) durch den Ausgleichkanal miteinander verbunden sind.

8. Bremssystem nach Anspruch 7, wobei jede der Bremsvorrichtungen (99) umfasst:
- den Hauptzylinder (119),
- einen ersten Kolben (100), umfassend zwei Außenflächen (117, 116) mit unterschiedlichen Durchmessern, und eine verbindende Fase zwischen den beiden Außenflächen,
- einen zweiten Kolben (100a), angeordnet, um mit dem ersten Kolben (100) zusammenzuwirken,
- ein Bremsbetätigungspedal;
wobei der erste Kolben (100) mit dem Pedal verbunden ist und angeordnet ist, sich, wenn auf das Pedal ein Druck angewendet wird, von einer Ruheposition in Richtung des Inneren des Hauptzylinders (119) zu bewegen, sodass die verbindende Fase den Hebel (103) des kinematischen Mechanismus (102) der entsprechenden Ausgleichvorrichtung (98) erreicht, wodurch der Hebel (103) veranlasst wird, sich von seiner anfänglichen Ruheposition in seine finale Position zu drehen;
wobei der zweite Kolben (100a) angeordnet ist, sich unter einem Schub des ersten Kolbens (100) in einer eng anliegenden Weise im Inneren des Hauptzylinders (119) zu bewegen, und in eine Ruheposition zurückzukehren, wenn der auf das Pedal angewendete Schub endet, und durch die Aktion einer Feder (100b), um den Hebel (103) zu erreichen, um so den Hebel zu veranlassen, sich von seiner finalen Position in seine anfängliche Ruheposition zu drehen.

9. Bremssystem nach den Ansprüchen 7 oder 8, wobei die erste und zweite Bremsvorrichtung (99) in einem einzelnen Körper (101) bereitgestellt sind.

10. Bremssystem nach einem der Ansprüche 7 bis 9, wobei die erste und zweite Bremsvorrichtung (99) mit Bremsverstärkern ausgestattet sind.

11. Bremssystem nach einem der Ansprüche 7 bis 9, wobei die erste und zweite Bremsvorrichtung (99) mit Bremsverstärkern mit Vorfüllfunktion der Hauptzylinder ausgestattet sind.

## Revendications

1. Ensemble de freinage (98, 99) comprenant un dispositif de freinage (99) et un dispositif d'équilibrage de pression (98), relié mécaniquement et hydrauliquement audit dispositif de freinage (99) comprenant un maître-cylindre (119), ledit dispositif d'équilibrage comprenant :
une soupape d'équilibrage (106, 107) normalement fermée pouvant être reliée à un conduit d'équilibrage, ladite soupape d'équilibrage étant positionnée à l'extérieur du maître-cylindre (119) du dispositif de freinage (99) et étant formée dans un corps (101) comprenant également le dispositif de freinage (99),
et étant **caractérisé en ce qu'**il comprend en outre :
un mécanisme cinématique (102), qui est conçu pour être commandé mécaniquement par ledit dispositif de freinage (99) et est relié mécaniquement à ladite soupape d'équilibrage (106, 107) de sorte à fournir un dispositif d'équilibrage à course commandée (98) ;
et **en ce que** :
ladite soupape d'équilibrage (106, 107) est située à l'intérieur d'un alésage cylindrique (120) disposé le long d'un axe longitudinal parallèle à l'axe longitudinal du maître-cylindre (119).

2. Ensemble de freinage (98, 99) selon la revendication 1, ladite soupape d'équilibrage (106, 107) comprenant :
une tige (106), et
un ensemble soupape d'équilibrage (107) conçu pour coopérer avec ladite tige (106), ladite tige et ledit ensemble soupape étant situés à l'intérieur dudit alésage cylindrique (120), ladite tige étant conçue pour interagir mécaniquement avec ledit mécanisme cinématique (102) de sorte à être déplacée d'une position de repos initiale à une position finale, permettant ainsi à ladite soupape d'équilibrage de passer d'une position fermée à une position ouverte.

3. Ensemble de freinage (98, 99) selon la revendication 2, ladite tige (106) étant conçue de sorte qu'une pression créée à l'intérieur du maître-cylindre (119) provoque une poussée sur ladite tige qui contribue à déplacer la tige de la position de repos initiale à la position finale.

4. Ensemble de freinage (98, 99) selon la revendication 2 ou 3, ledit mécanisme cinématique (102) comprenant :
un culbuteur (103),
un point d'articulation (104) sur lequel le culbuteur (103) est articulé, et
un ressort (100c) ;
ledit culbuteur (103) ayant une première extrémité de forme appropriée pour interagir avec ledit dispositif de freinage (99) et une seconde extrémité reliée à la tige (106), et étant conçu pour se déplacer, avec la tige (106), d'une position de repos initiale à une position finale et vice versa ;
ledit ressort (100c) étant conçu pour maintenir ladite tige dans la position de repos initiale, à la fois pendant le montage et le fonctionnement.

5. Ensemble de freinage (98, 99) selon l'une quelconque des revendications 2 à 4, l'ensemble soupape d'équilibrage (107) de ladite soupape comprenant :
une douille de butée (108),
une entretoise (109),
un bouchon (110),
un premier joint (111a) et un deuxième joint (111b) conçus de sorte à assurer l'étanchéité de l'ensemble soupape d'équilibrage (107) en coopérant avec la tige (106), et
un troisième joint (112a) et un quatrième joint (112b) conçus pour assurer l'étanchéité de l'ensemble soupape d'équilibrage (107) en coopérant avec la paroi de l'alésage cylindrique (120) ;
la douille (108), l'entretoise (109) et le capuchon (110) ayant des alésages centraux coaxiaux et communicants, conçus pour recevoir la tige (106),
l'entretoise (109) comprenant des chambres et des passages (114, 115, 116) mettant lesdits alésages centraux en communication avec un trou (113) pouvant être relié au conduit d'équilibrage.

6. Ensemble de freinage (98, 99) selon la revendication 5, ladite soupape d'équilibrage étant :
dans sa position fermée lorsque ladite tige (106) est dans la position de repos initiale, dans laquelle la tige occupe l'alésage central de l'entretoise (109) et vient en prise avec le premier et le deuxième joint (111a, 111b), obstruant ainsi la communication entre une chambre interne (116) en forme d'anneau de l'entretoise (109) et les alésages centraux de l'ensemble soupape (107) ;
dans sa position ouverte lorsque ladite tige (106) se déplace vers la position finale, se séparant ainsi du premier joint (111a) et libérant, au moins partiellement, l'alésage central de l'entretoise (109), permettant ainsi la communication entre la chambre interne (116) en forme d'anneau de l'entretoise (109) et les alésages centraux de l'ensemble soupape (107).

7. Système de freinage hydraulique comprenant :
un premier et un second ensemble de freinage (98, 99) comprenant des premier et second dispositifs de freinage (99) et des premier et second dispositifs d'équilibrage de pression (98) respectifs, selon l'une quelconque des revendications 1 à 6,
un conduit d'équilibrage,
lesdits premier et second dispositifs d'équilibrage (98) étant reliés l'un à l'autre par ledit conduit d'équilibrage.

8. Système de freinage selon la revendication 7, chacun desdits dispositifs de freinage (99) comprenant :
le maitre-cylindre (119),
un premier piston (100) comprenant deux surfaces extérieures (117, 116) ayant différents diamètres, et un chanfrein de jonction entre lesdites deux surfaces extérieures,
un second piston (100a) conçu pour coopérer avec ledit premier piston (100),
une pédale d'actionnement de frein ;
ledit premier piston (100) étant relié à ladite pédale et étant conçu pour se déplacer, lorsqu'une poussée est appliquée sur ladite pédale, d'une position de repos vers l'intérieur du maître-cylindre (119), de sorte que ledit chanfrein de liaison atteigne le culbuteur (103) du mécanisme cinématique (102) du dispositif d'équilibrage (98) respectif, faisant ainsi tourner le culbuteur (103) de sa position de repos initiale à sa position finale ;
ledit second piston (100a) étant conçu pour se déplacer, de manière étanche, à l'intérieur du maître-cylindre (119) sous une poussée dudit premier piston (100), et pour revenir à une position de repos lorsque ladite poussée appliquée sur ladite pédale cesse et par l'action d'un ressort (100b), de sorte à atteindre ledit culbuteur (103), faisant ainsi tourner le culbuteur de sa position finale à sa position de repos initiale.

9. Système de freinage selon la revendication 7 ou 8, lesdits premier et second dispositifs de freinage (99) étant fournis dans un corps unique (101).

10. Système de freinage selon l'une quelconque des revendications 7 à 9, lesdits premier et second dispositifs de freinage (99) étant pourvus de servofreins.

11. Système de freinage selon l'une quelconque des revendications 7 à 9, lesdits premier et second dispositifs de freinage (99) étant pourvus de servofreins avec une fonction de pré-remplissage des maîtres-cylindres.
